# EUROPÄISCHE PATENTSCHRIFT

(11) **EP 0 542 028 B1**
(45) Veröffentlichungstag und Bekanntmachung des Hinweises auf die Patenterteilung: **10.07.1996**
(21) Anmeldenummer: 92118322.4
(22) Anmeldetag: 27.10.1992
(51) Int. Cl.: C09K 19/02, G02F 1/137

(54) **Verfahren zur Herstellung einer ferroelektrischen oder antiferroelektrischen oder ferrielektrischen Ordnung in glasartig erstarrenden Flüssigkristallen**
Method of realization of a ferroelectric or antiferro-electric or ferrielectric order in glassy solidifying liquid crystal
Procédé de préparation d'un ordre ferroélectrique de antiferroélectrique ou ferriélectrique dans un cristal liquide solidifiant en phase vitreuse

(30) Priorität: 14.11.1991 DE 4137408
(43) Veröffentlichungstag der Anmeldung: 19.05.1993
(73) Patentinhaber: BASF Aktiengesellschaft, D-67063 Ludwigshafen (DE)
(72) Erfinder: Bach, Volker, Dr., W-6730 Neustadt (DE); Etzbach, Karl-Heinz, Dr., W-6710 Frankenthal (DE); Siemensmeyer, Karl, Dr., W-6710 Frankenthal (DE); Wagenblast, Gerhard, Dr., W-6719 Weisenheim (DE)

(56) Entgegenhaltungen:
- EP-A- 0 293 911
- EP-A- 0 399 279
- DE-A- 3 827 603

## Beschreibung

Die vorliegende Erfindung betrifft ein Verfahren zur Herstellung einer ferroelektrischen oder antiferroelektrischen oder ferrielektrischen Ordnung in antiferroelektrisch smektisch flüssigkristallinen, glasartig erstarrenden Flüssigkristallen.

Es existieren flüssigkristalline Polymere, in denen die flüssigkristalline Phase in einer nematischen Orientierung oder in einer orthogonalen Schichtstruktur (orthogonale smektische Phasen) oder in einer getilteten Schichtstruktur (getiltet smektische Phasen) eingefroren sind (vgl. DE-OS 39 17 196). Auch getiltete ferroelektrisch smektisch glasartig erstarrte flüssigkristalline niedermolekulare Materialien sind bekannt.

Weiterhin ist bekannt, daß bei niedermolekularen Flüssigkristallen antiferroelektrische oder ferrielektrische Phasen auftreten (Jap. J. Appl. Phys., 28 (1989), L1265), die jedoch bei niedermolekularen Flüssigkristallen nicht glasartig eingefroren werden können.

Bekannt ist auch das Auftreten von antiferroelektrischen Phasen in polymeren flüssigkristallinen Phasen (Third int. Conference on Ferroelectric Liquid Crystals, Boulder, Colorado vom 24.-28. Juni 1991).

Die bekannten Materialien können vorteilhaft auf den Gebieten der integrierten Optik, der Optoelektronik und der Datenspeicherung verwendet werden, wobei die Verwendung in optoelektronischen Geräten wie Displays, optoelektronischen Shuttern, optoelektronischen Diaphragmen, Gedächtniselementen, optischen Modulatoren, Druckerköpfen und multifokalen Linsen beispielhaft und kursorisch genannt werden. (H.Finkelmann in "Polymer Liquid Crystals", hrsg.: A. Ciferri, W.R. Krigbaum, R.B. Meyer, Academic Press 1982).

Die bisher bekannten Materialien weisen allerdings Nachteile auf wie z.B.
- instabile Zustände im Glaszustand
- ferroelektrisch flüssigkristalline Polymere sind nur zwischen zwei Zustände bistabil schaltbar
- schlechte Verarbeitbarkeit (z.B. bei der Herstellung von Devices)
- Probleme mit der Schaltbarkeit
- zu hohe Schaltzeiten
- zu kleine Zustandsbereiche der Phasen
- nicht einfrierbar in der antiferroelektrischen Phasenstruktur.

Aufgabe der vorliegenden Erfindung ist es, neue glasartig erstarrte, polar geordnete, flüssigkristalline Zustände oder Phasen zu finden, die die Nachteile des Standes der Technik nicht mehr länger aufweisen. Weiter ist es die Aufgabe der vorliegenden Erfindung ein Verfahren zur Herstellung von glasartig eingefrorenen flüssigkristallinen Zuständen zu finden.

Diese Aufgabe wird durch das Verfahren zur Herstellung einer ferroelektrischen oder antiferroelektrischen oder ferrielektrischen Ordnung in glasartig erstarrenden Flüssigkristallen durch Aufheizen einer mesogenen Verbindung, deren Glasstufe oberhalb 25°C liegt und deren kritische Feldstärke im Bereich von 3-40 V/µm liegt, auf eine Temperatur oberhalb der Glasstufe und anschließendes Abkühlen auf eine Temperatur unterhalb der Glasstufe, wodurch je nach Feldstärke die eine order die anden Ordnung hervorgerufen wird, gelöst.

Bei den erfindungsgemäß zu verwendenden Materialien handelt es sich um chirale Verbindungen oder chirale Polymere, welche innerhalb bestimmter Temperaturbereiche flüssigkristalline Bereiche aufweisen und unterhalb bestimmter Temperaturbereiche glasartig erstarren, wobei eine Schichtstruktur im Glaszustand des Polymers eingefroren wird. Innerhalb einer Schicht dieser Schichtstruktur liegt eine statistische oder geordnete Verteilung der Molekülschwerpunkte der Polymerseitenketten oder der chiralen Verbindungen vor. Der Direktor n, der die Vorzugsrichtung der Polymerseitenketten angibt, weist eine Neigung gegenüber der Schichtnormalen z auf, die durch den Winkel zwischen n und z angegeben wird. Der Winkel wird als Tiltwinkel bezeichnet. Der Tiltwinkel kann sowohl vorliegen oder durch externe Kräfte, z.B. elektrische und/oder magnetische Felder und/oder Scherung induziert werden.

Die erfindungsgemäß zu verwendenden Materialien, welche in einer Schichtstruktur mit induziertem oder vorhandenem Tilt vorliegen, sollen in einer Mikroschicht polare Eigenschaften, wie z.B. in einer chiral smektisch flüssigkristallinen C-Phase (S_{c}*-Phase) besitzen. Die polaren Eigenschaften einer Mikroschicht sollen jedoch durch die polaren Eigenschaften der direkten Nachbarschichten teilweise oder vollständig kompensiert werden.

Solches Verhalten bezeichnet man als ferrielektrisch oder antiferroelektrisch.

Bevorzugt einzusetzen sind diese Materialien auf den folgenden Anwendungsgebieten:
- elektrische, magnetische und/oder optische Speichersysteme,
- der Elektrofotografie,
- als elektronisches Bauteil oder als Bestandteil elektronischer Bauteile,
- als elektrooptisches Bauteil oder als Bestandteil elektrooptischer Bauteile,
- in Druckverfahren.

Überraschenderweise treten bei den erfindungsgemäß zu verwendenden Materialien, wenn sie dem erfindungsgemäßen Verfahren zur Herstellung einer ferroelektrischen oder antiferroelektrischen oder ferrielektrischen Ordnung in antiferroelektrisch smektisch flüssigkristallinen, glasartig erstarrenden Flüssigkristallen unterzogen werden, vorteilhafte Eigenschaften wie z.B.
- geringere Schaltzeiten,
- tristabiles Schalten,
- große Zustandsbereiche,
- Einfrierbarkeit der polaren Ordnung,
- feldabhängige polare Ordnung,
auf.

### Beispiele

### Allgemeine Versuchsvorschrift:

### Probenpräparation:

Die Präparation der Probe erfolgte in Zellen zwischen zwei strukturierten, elektrisch leitfähig beschichteten, planparallelen Glasplatten, auf die durch bekannte Verfahren eine Polyimid-Orientierungsschicht aufgebracht war. Die Schichtdicke der flüssigkristallinen Probe betrug durchschnittlich 4 µm und wurde für jede Meßzelle durch Interferometrie bestimmt.

Das Füllen der Meßzelle mit der Substanz geschah in isotroper Phase durch Kapillarkräfte. Hierfür wurde die Zelle mit der Substanz, welche am Rand aufgebracht wurde, auf eine Temperatur oberhalb der Klärtemperatur erhitzt. Durch die Kapillarwirkung der Zelle wurde das Material in den Zellraum gezogen und dann langsam in die flüssigkristalline Phase abgekühlt. Hierdurch erreicht man in Verbindung mit der Wirkung der Orientierungsschicht die gewünschte planare Randorientierung des Flüssigkristalls. Zur Verbesserung der Orientierung kann auch ein elektrisches und/oder magnetisches Feld angelegt werden.

### Polarisations- und Tiltwinkelmessungen:

Zur Bestimmung des Tiltwinkels und der spontanen Polarisation wurde die zu untersuchende Probe nach dem oben angegebenem Verfahren in einer Zelle präpariert und orientiert. Die Temperierung geschah in einem Mettler FP 800/85 Mikroskop Heiztisch.

Die Bestimmung der spontanen Polarisation geschah nach dem Dreiecksverfahren (K. Miyasato et al., Jap. J. Appl. Phys., 22 (1983), L661). Das hierfür verwendete Spannungssignal wurde mittels eines Funktionsgenerators (Wavetek 273) erzeugt und mittels eines Leistungsverstärkers (Krohn Hite 7500) verstärkt. Die Aufnahme des Stromes als Funktion der Zeit erfolgte durch ein Speicheroszilloskop (Hewlett Packard HP54501). Die spontane Polarisation wurde dann aus der gemessenen Zeitabhängigkeit des Stromes bestimmt.

Das Vorzeichen der Polarisation wurde entsprechend der Konvention nach Lagerwall et al. bestimmt (S.T. Lagerwall, I. Dahl, Mol. Cryst. Liq. Cryst., 114 (1984), 151).

Die Bestimmung des Tiltwinkel geschah durch Messung des Schaltwinkels.

Im Ausgangszustand steht der Direktor n der getilteten smektischen Schicht bei angelegtem elektrischen Feld +E parallel zur Richtung des Polarisators und senkrecht zum Analysator. Die Probe erscheint dunkel. Durch Umschalten des elektrischen Feldes von +E nach -E wird der Direktor n um einen Winkel ϕ, den Schaltwinkel, der dem doppelten Tiltwinkel entspricht, gedreht. Durch Drehen des Mikroskopdrehtisches über die Schichtnormale z hinweg, bis wieder maximale Extinktion eintritt, wird der Schaltwinkel, der dem Drehwinkel des Mikroskopdrehtisches entspricht, bestimmt.

Die Bestimmung der Schaltzeit erfolgte aus der Transmissionsänderung beim Wechsel der Feldstärke von -E nach +E. Es wurde folgendermaßen vorgegangen:

Die Probe wurde zwischen gekreuzten Polarisatoren so orientiert, daß bei anliegendem Feld +E die Probe dunkel erschien. Es wurde dann ein Feld von -E angelegt. Die Probe hellte sich auf. Zur Bestimmung der Schaltzeit wurde nun schnell das Feld von -E nach +E geändert, während gleichzeitig die Änderung der Transmission mittels einer Photodiode verfolgt wurde. Als Schaltzeit wurde der 10%/90% Wert bestimmt.

Als erfindungsgemäß zu verwendende Materialien eignen sich Substanzen wie sie in der DE-OS 39 17 196 beschrieben wurden. Sehr gut geeignet sind die polymeren Materialien dann, wenn die Dispersität gering (<1,2) und das Molekulargewicht der Polymere im Bereich zwischen 2000 g/mol und 10000 g/mol liegen.

Die erfindungsgemäß zu verwendenden Materialien zeigen in Abwesenheit eines elektrischen Feldes optisch eine einachsige Phasenstruktur.

Weiterhin zeigen die erfindungsgemäß zu verwendenden Materialien innerhalb der flüssigkristallinen Phase und oberhalb der Glasphase ein ausgeprägtes Sprungverhalten des Tiltwinkels. Das bedeutet wird eine bestimmte, von der Substanz und Temperatur abhängige, angelegte Feldstärke überschritten so schaltet der Flüssigkristall von der antiferroelektrischen oder ferrielektrischen Ordnung in die ferroelektrische Ordnung.

Verbunden mit diesem ausgeprägten Sprungverhalten des Tiltwinkels ist das Fließen eines der Änderung der Dipoldichte entsprechenden Polarisationsstromes.

### Beispiele:

Bei allen Beispielen wurden die Proben entsprechend der oben angegebenen Vorgehensweise präpariert.

Es wurde für das Beispiel 1 bis 3 das folgende flüssigkristalline Material verwendet:

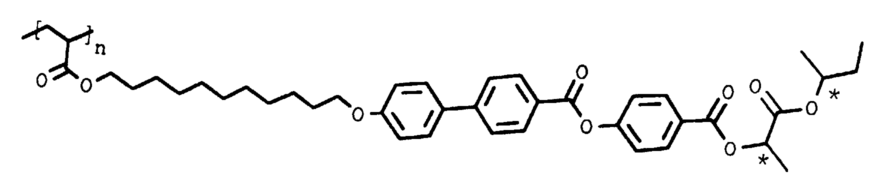

Es zeigt das Phasenverhalten Gl 45 S_{c}*A 134 S_{A} 160 I

### Beispiel 1

### Herstellung eines antiferroelektrisch orientierten Glases

An die mit dem oben bezeichneten flüssigkristallinen Material gefüllte Zelle wird während des Abkühlvorganges in die Glasphase kein elektrisches Feld angelegt. Es bildet sich die antiferroelektrische Ordnung der Mikroschichten wie oben beschrieben aus. Die Abkühlrate spielt hierbei keine Rolle. Es resultiert eine optisch einachsige orthogonale Struktur, welche keinerlei Oberflächenpolarisation zeigt. Der optische Tiltwinkel innerhalb der so behandelten Probe ist Null.

### Beispiel 2

### Herstellung eines ferrielektrisch orientierten Glases

An die mit dem oben bezeichneten flüssigkristallinen Material gefüllte Zelle wird während des Abkühlvorganges in die Glasphase ein elektrisches Feld angelegt. Dieses elektrische Feld ist kleiner als die Sprungfeldstärke Eₛ, oberhalb der sich die ferroelektrische Ordnung bildet. Es bildet sich die ferrielektrische Ordnung der Mikroschichten wie oben beschrieben aus. Die Abkühlrate spielt hierbei keine Rolle. Es resultiert eine optisch zweiachsige getiltete Struktur. Der Tiltwinkel und damit auch die Dipoldichte innerhalb der so behandelten Probe hängt von der angelegten Feldstärke E ab. Das Vorzeichen der Oberflächenpolarisation wird durch die Feldrichtung beeinflußt.

| angelegtes Feld V/µm | Tiltwinkel grd | Oberflächenpolarisation Vorzeichen |
|---|---|---|
| +25 | 10 | + |
| +37 | 15 | + |
| -25 | 10 | - |
| -37 | 15 | - |

### Beispiel 3

### Herstellung eines ferroelektrisch orientierten Glases

An die mit dem oben bezeichneten flüssigkristallinen Material gefüllte Zelle wird während des Abkühlvorganges in die Glasphase ein elektrisches Feld angelegt. Dieses elektrische Feld ist größer als die Sprungfeldstärke Eₛ, oberhalb der sich die ferroelektrische Ordnung bildet. Die Abkühlrate spielt hierbei keine Rolle.

Es resultiert eine optisch zweiachsige getiltete Struktur. Der Tiltwinkel hängt oberhalb der Sprungfeldstärke nicht mehr von dem angelegten Feld ab. Die Dipoldichte innerhalb der so behandelten Probe ist konstant, von der angelegten Feldstärke E unabhängig. Das Vorzeichen der Oberflächenpolarisation wird durch die Feldrichtung beeinflußt.

### Beispiel 4

### Geringere Schaltzeiten in der antiferroelektrischen Struktur

Für das Beispiel 4 wurde der folgende Flüssigkristall verwendet:

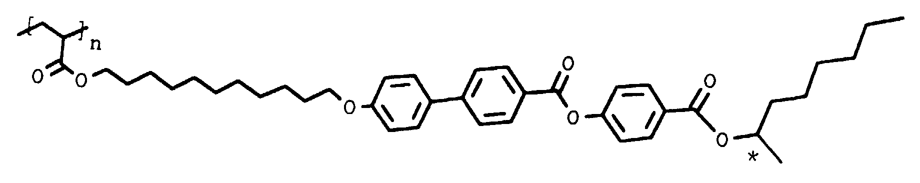

Die Phasensequenz dieser Substanz ist

gl 45 S_{c}*_{A} 160 S_{A} 185 I

Die Probe wurde nach dem oben beschriebenen Verfahren in die Zelle eingefüllt und orientiert. Die Schaltzeitexperimente wurden in der flüssigkristallinen Phase bei einer Temperatur von 140°C durchgeführt. Es wurde bei einer Feldstärke von 10 V/µm bzw 17,5 5 V/µm die Schaltzeit bestimmt. Bei einer Feldstärke von 10 V/µm (es handelt sich hier um eine ferrielektrische Orientierung) beträgt die Schaltzeit bei einem Kontrast von 10 auf 90% 40 µs, wohingegen bei einem Feld von 17,5 V/µm (es handelt sich um eine ferroelektrische Orientierung) auch bei einem Kontrast von 10 auf 90% eine Schaltzeit von 115 µs resultierte.

### Beispiel 5

### Stabilität des Glaszustandes

Es wurde das gleiche Material verwendet wie in Beispiel 1 bis 3. Die Herstellung der Proben erfolgte analog Beispiel 1 bis 3. Die Proben wurden bei einer anliegenden Feldstärke von 20 V/µm langsam in den Glaszustand abgekühlt. Es konnte innerhalb eines Zeitraumes von mehr als 3 Monaten keinerlei Veränderung der Probe und des eingefrorenen Glaszustandes nachgewiesen werden.
Tiltwinkel nach Einfrieren: 10°
Tiltwinkel nach 6 Monaten: 10°

## Patentansprüche

1. Verfahren zur Herstellung einer ferroelektrischen oder antiferroelektrischen oder ferrielektrischen Ordnung in glasartig erstarrenden Flüssigkristallen durch Aufheizen einer mesogenen Verbindung, deren Glasstufe oberhalb 25°C liegt und deren kritische Feldstärke im Bereich von 3-40 V/µm liegt, auf eine Temperatur oberhalb der Glasstufe und anschließendes Abkühlen auf eine Temperatur unterhalb der Glasstufe, dadurch gekennzeichnet, daß man
a) zur Erzeugung einer ferroelektrischen Ordnung beim Abkühlen ein elektrisches Feld einwirken läßt, welches oberhalb der kritischen Feldstärke liegt und so ein nach außen wirksames Dipolmoment erzeugt oder daß man
b) zur Erzeugung einer antiferroelektrischen Ordnung beim Abkühlen kein oder ein so geringes Feld einwirken läßt, daß kein oder fast kein nach außen wirksames Dipolmoment erzeugt wird oder daß man
c) zur Erzeugung einer ferrielektrischen Ordnung beim Abkühlen ein elektrisches Feld einwirken läßt, welches unterhalb der kritischen Feldstärke liegt und so keine vollständige ferroelektrische Ordnung erzeugt, sondern ein nach außen wirksames Dipolmoment bewirkt, welches proportional zur angelegten Feldstärke ist.

2. Verfahren nach Anspruch 1, dadurch gekennzeichnet, daß Materialien eingesetzt werden, welche oberhalb der glasartig erstarrten flüssigkristallin angeordneten Phase ein antiferroelektrisch smektisch flüssigkristallines Verhalten zeigen.

3. Verwendung der nach Anspruch 1 oder 2 behandelten, glasartig erstarrenden flüssigkristallinen Materialien in optischen Speichermedien,
elektrischen / magnetischen Speichersystemen,
elektrophotografischen Verfahren,
elektronischen Bauteilen,
elektrooptischen Bauteilen oder Baugruppen,
in Druckverfahren mit ferroelektrischen oder antiferroelektrischen Schichten.

## Claims

1. A process for the production of a ferroelectric or antiferroelectric or ferrielectric order in liquid crystals which solidify in a glass-like manner, in which a mesogenic compound whose glass transition temperature is above 25°C and whose critical field strength is in the range from 3-40 V/µm is heated to a temperature above the glass transition temperature and subsequently cooled to below the glass transition temperature, which comprises
a) in order to produce a ferroelectric order, exposing the compound during cooling to an electrical field which is above the critical field strength and thus generates an externally effective dipole moment, or
b) in order to produce an antiferroelectric order, exposing the compound during cooling to no field or such a low field that no or virtually no externally effective dipole moment is generated, or
c) in order to produce a ferrielectric order, exposing the compound during cooling to an electrical field which is below the critical field strength and thus does not generate a full ferroelectric order, instead generates an externally effective dipole moment which is proportional to the applied field strength.

2. A process as claimed in claim 1, wherein materials are employed which have an antiferroelectric, smectic, liquid-crystalline behavior above the liquid-crystalline ordered phase which has solidified in a glass-like manner.

3. The use of a liquid-crystalline material which has solidified in a glass-like manner and has been treated as claimed in claim 1 or 2 in an optical storage medium,
electrical/magnetic storage systems,
electrophotographic processes,
electronic components,
electro-optical components or assemblies or
in printing processes using ferroelectric or antiferroelectric layers.

## Revendications

1. Procédé en vue de la réalisation d'un ordre ferroélectrique, antiferroélectrique ou ferriélectrique dans des cristaux liquides se solidifiant dans un état vitreux, par réchauffement jusqu'à une température située au-dessus de la transition à l'état vitreux d'une liaison mésogène dont la transition à l'état vitreux est située au-dessus de 25°C, et dont l'intensité critique du champ est située dans la plage de 3-40 V/µm, et ensuite refroidissement à une température située en dessous de la transition à l'état vitreux, caractérisé en ce que:
a) pour la création d'un ordre ferroélectrique lors du refroidissement, on fait agir un champ électrique qui est supérieur à l'intensité critique du champ électrique, et on crée ainsi un moment dipolaire agissant sur l'extérieur, ou en ce que
b) pour la création d'un ordre antiferroélectrique lors du refroidissement, on ne fait agir aucun champ ou un champ suffisamment faible pour qu'aucun ou pratiquement aucun moment dipolaire agissant sur l'extérieur ne soit créé, ou en ce que
c) pour la création d'un ordre ferriélectrique lors du refroidissement, on fait agir un champ électrique qui est inférieur à l'intensité critique du champ, et on ne crée ainsi pas un ordre complètement ferroélectrique, mais on réalise un moment dipolaire agissant sur l'extérieur, qui est proportionnel à la force du champ appliqué.

2. Procédé selon la revendication 1, caractérisé en ce que l'on utilise des matériaux qui présentent un comportement de cristaux liquides smectiques antiferroélectriques au-dessus de la transition dans la phase de cristaux liquides solidifiés dans un état vitreux.

3. Utilisation des matériaux à cristaux liquides solidifiés dans un état vitreux, traités selon la revendication 1 ou 2, dans
des supports d'enregistrement optique,
des systèmes d'enregistrement électrique/magnétique,
des procédés électrophotographiques,
des composants électroniques,
des composants ou des modules électrooptiques, et
dans des procédés d'impression avec des couches ferroélectriques ou antiferroélectriques.
